# EUROPÄISCHE PATENTSCHRIFT

(11) **EP 3 227 010 B1**
(45) Veröffentlichungstag und Bekanntmachung des Hinweises auf die Patenterteilung: **02.08.2023**
(21) Anmeldenummer: 15801937.2
(22) Anmeldetag: 05.11.2015
(51) Int. Cl.: B01F 23/233, B01F 23/234, B01F 27/2123

(54) **VORRICHTUNG UND VERFAHREN ZUM BELADEN EINER FLÜSSIGKEIT MIT EINEM GAS**
APPARATUS AND METHOD FOR LOADING A LIQUID WITH GAS
APPAREIL ET PROCÉDÉ POUR CHARGER UN LIQUIDE AVEC GAZ

(30) Priorität: 03.12.2014 DE 102014117734
(43) Veröffentlichungstag der Anmeldung: 11.10.2017
(73) Patentinhaber: Henkel AG & Co. KGaA, 40589 Düsseldorf (DE)
(72) Erfinder: METZLER, Mario, A-6890 Lustenau (AT); BALDAUF, Günter, A-6914 Hohenweiler (AT)
(86) Internationale Anmeldenummer: PCT/IB2015/058561
(87) Internationale Veröffentlichungsnummer: WO 2016/087968

(56) Entgegenhaltungen:
- EP-A1- 2 746 382
- GB-A- 965 855
- US-A- 3 669 422
- US-A- 3 723 020

## Beschreibung

Die Erfindung betrifft eine Vorrichtung zum Beladen einer insbesondere höherviskosen Flüssigkeit mit einem Gas, insbesondere mit Luft, mit einem die Flüssigkeit und das Gas aufnehmenden Behälter und mit einem zumindest teilweise im Behälter angeordneten Rührwerk mit einer den Behälter zumindest teilweise vertikal durchsetzenden Antriebswelle, wobei die Antriebswelle in einem Förderrohr angeordnet ist und ein die Flüssigkeit durch das Förderrohr zu mindestens einem Auslauf transportierendes Förderorgan (19) antreibt. Die Erfindung ist ferner auf ein Verfahren zum Beladen einer insbesondere höherviskosen Flüssigkeit mit einem Gas unter Verwendung einer erfindungsgemäßen Vorrichtung gerichtet.

Wenn höherviskose Flüssigkeiten wie Polyurethan- oder Silikonrohstoffe zur Herstellung von Dichtungen oder dergleichen verarbeitet werden, ist die Vorbehandlung dieser viskosen Materialien für die Qualität des daraus später hergestellten Erzeugnisses von großer Bedeutung. Bei den verarbeiteten Rohstoffen handelt es sich oft um eine oder zwei Komponenten eines mehrkomponentigen Systems, die in einem Mischer intensiv miteinander vermischt werden und dann unter Bildung eines Gases, meist Kohlendioxid, chemisch miteinander reagieren und nach Ausstoß aus dem Mischer und Auftrag auf einem Substrat aufschäumen. Hierdurch können beispielsweise unmittelbar an einem Bauteil angeformte, aufgeschäumte Dichtungen (Formed in Place-Foamed Gaskets, FiPFG) hergestellt werden.

Insbesondere bei der Verarbeitung von Silikonmaterialien zur Herstellung derartiger, aufschäumender Dichtungen oder Kaschierungen ist für eine gute Schaumqualität der Luftgehalt in dem verhältnismäßig hochviskosen Ausgangsmaterial von besonderer Bedeutung. Die verarbeiteten Werkstoffe, insbesondere Silikonwerkstoffe, sollen vor ihrer Weiterverarbeitung, beispielsweise ihrer Vermischung mit einer zweiten Komponente in einem Mischer, möglichst mit einer genau gesteuerten Luftmenge beladen sein, das heißt, mit bei erhöhtem Flüssigkeitsdruck in der Flüssigkeit gelöster Luft, die für die bei der späteren chemischen Reaktion entstehenden Gasblasen Keime im Material bildet, an denen sich das durch die chemische Reaktion entstehende Gas anlagern und hierdurch einen qualitativ besonders guten Schaum bilden kann.

Aus der EP 2 746 382 A1 ist ein bei Umgebungsdruck betriebener, gattungsgemäßer Bioreaktor bekannt, der vier radial nach außen gerichtete Kanäle aufweist, deren Einläufe radial innen mit dem Auslauf an dem Förderrohr in Verbindung sind, durch das Flüssigkeit mit einer Schnecke im Behälter nach oben gefördert wird. Die vier radial nach außen gerichteten Kanäle haben zusammen denselben Einlass- und Auslassquerschnitt wie der Auslass am Förderrohr. Flüssigkeit, die von der Schnecke aus dem unteren Bereich des Behälters nach oben zum oberen Auslass am Förderrohr gefördert wird, gelangt dort in die vier Einlassöffnungen 14 der sich radial erstreckenden Kanäle, durch die die Flüssigkeit dann schräg nach unten strömt und nahe der Behälterwandung wieder in den zylindrischen Tank 1 gelangt. Der Ablauf der Flüssigkeit erfolgt dabei im Wesentlichen unterhalb eines Flüssigkeitsspiegels der im Behälter aufgenommenen Flüssigkeit. Eine Belüftung der Flüssigkeit im Behälter findet an der Grenzfläche zwischen Gas und Flüssigkeit, nämlich auf Höhe des Flüssigkeitsspiegels statt.

Die GB 965 855 A offenbart eine Vorrichtung zum Verarbeiten einer Flüssigkeit, mit einem offenen Behälter und einem darin angeordneten Rührwerk sowie einem auf der Welle des Rührwerks angeordneten Förderorgan in Form einer Förderschnecke, die ein Rohr durchsetzt, durch das die Flüssigkeit mit der Förderschnecke aus dem Behälter gefördert wird.

Mit der vorliegenden Erfindung wird eine Vorrichtung gemäß Anspruch 1 und ein Verfahren gemäß Anspruch 16 vorgeschlagen, womit ein höherviskoses Silikon- oder auch Polyurethanmaterial unter Druck gezielt mit Luft oder einem anderen Gas kontrolliert beladen werden kann, das Gas in der Flüssigkeit also in bestimmter Konzentration in Lösung kommt, vorzugsweise bis das Material mit dem zum Einsatz kommenden Gas weitestgehend gesättigt ist. Die Vorrichtung und das Verfahren lassen sich allerdings auch in anderen Anwendungsbereichen einsetzen, wo es darauf ankommt, ein Gas in einer Flüssigkeit zu lösen.

Andere, bekannte Vorrichtungen weisen hierfür einen die Flüssigkeit und das Gas aufnehmenden Druckbehälter auf, in dem ein Rührwerk mit einer den Druckbehälter zumindest teilweise durchsetzenden Antriebswelle angeordnet ist, das durch stetiges Rühren der Flüssigkeit im Behälter für einen Austausch mit der über dem Flüssigkeitsspiegel stehenden Druckluft sorgt, so dass es nach mehr oder minder langer Rührzeit zu einer Sättigung der Flüssigkeit mit dem Gas kommt. Bei bekannten Vorrichtungen wird meist Luft von unten in einen Behälter eingeblasen (über Düse, Ring etc.) die sich dann in feinen Blasen in der viskosen Flüssigkeit verteilt. Eine andere bekannte Anordnung sieht den Einsatz einer externen Rezirkulationspumpe vor, mit der das viskose Material aus einem Tank abgezogen und in einem Kreislauf zurück in den Tank gefördert wird, wo es dann über einer Art Haube aus der Förderleitung austritt und entlang der Haube zurück in den unten im Tank stehenden Flüssigkeitsvorrat fließt.

Abgesehen davon, dass die bekannten Vorrichtungen, insbesondere solche mit externer Rezirkulationspumpe sehr komplex aufgebaut sind, sind die Bearbeitungszeiten beim Begasen mit derartigen bekannten Vorrichtungen vergleichsweise lang, darüber hinaus kann es leicht dazu kommen, dass sich in der Flüssigkeit größere Gasblasen bilden, punktuell also ein zwei-Phasen-Material vorliegt, was in der anschließenden Weiterverarbeitung Probleme bereiten kann.

Aufgabe der Erfindung ist es, eine Vorrichtung und ein Verfahren der eingangs genannten Art zu schaffen, womit bei besonders kompakter Bauart eine zuverlässige und im Vergleich zum Stand der Technik schnelle Beladung der Flüssigkeit mit dem Gas bis hin zum Sättigungszustand möglich ist, ohne dass sich dabei in der Flüssigkeit ungelöste Gasblasen ausbilden.

Diese Aufgabe wird vorrichtungsgemäß dadurch gelöst, dass der Behälter als Druckbehälter (12) ausgestaltet ist und dass unterhalb des Auslaufs aus dem Förderrohr eine oberhalb des Flüssigkeitsspiegels eines im Druckbehälter stehenden Flüssigkeitsvorrats angeordnete Ablauffläche für die aus dem Auslauf strömende Flüssigkeit vorgesehen ist.

Mit der erfindungsgemäßen Vorrichtung gemäß dem Anspruch 1 kann in Ausübung des erfindungsgemäßen Verfahrens in dem Druckbehälter die darin aufgenommene Flüssigkeit mittels des Rührwerks gerührt und im Behälterinneren durch das Förderrohr auf ein Niveau oberhalb des Flüssigkeitsspiegels gefördert und durch den mindestens einen Auslauf auf die Ablauffläche gebracht werden, auf der die Flüssigkeit dann in dünner Schicht verteilt abläuft und dabei mit dem oberhalb des Flüssigkeitsspiegels unter Druck stehenden Gas beladen wird, wobei gleichzeitig etwa in der Flüssigkeit in Form von Blasen enthaltenes, ungelöstes Gas in die Gasatmosphäre ausgast. Indem die Antriebswelle des Rührwerks zugleich das Förderorgan antreibt, mit dem die Flüssigkeit in dem Förderrohr im Inneren des Druckbehälters nach oben über die Ablauffläche gepumpt wird, erhält man eine besonders kompakte und mit lediglich einem gemeinsamen Antrieb für Rührwerk und Förderpumpe wartungsarme Bauform. Während das Rührwerk für die gleichmäßige Verteilung des Gases in der Flüssigkeit sorgt, wird zugleich dafür gesorgt, dass zwischen Gas und Flüssigkeit eine große Austauschfläche und damit die Möglichkeit besteht, dass sich das Gas nach nur kurzer Verweilzeit in dem Behälter mit der Flüssigkeit vermischt und sich in dieser löst. Dies wird durch die parallel zum Verrühren der Flüssigkeit mittels des Rührwerks erfolgende Förderung der Flüssigkeit auf die Ablauffläche erreicht, über die die Flüssigkeit in dünner Schicht abfließen und hierdurch in Kontakt mit der über dem Flüssigkeitsspiegel stehenden Druckluft kommen kann.

Vorzugsweise wird das Förderorgan von einer im Förderrohr angeordneten, drehfest mit der Antriebswelle gekoppelten Förderschnecke gebildet, wobei es sich als vorteilhaft erwiesen hat, wenn die Förderschnecke am unteren Ende des Förderrohrs ein Stück weit aus diesem herausragt. Hierdurch wird sichergestellt, dass auch bei hochviskosen, also dickflüssigen Materialien, es beim Ansaugen/Pumpen in das Förderrohr nicht zu einem Strömungsabriss kommt. Der Vorstand der Förderschnecke über das Förderrohr gewährleistet auch bei hochviskosen Flüssigkeiten eine gute Ansaugwirkung und damit eine zuverlässige Flüssigkeitsförderung. Gleichbedeutend mit dieser Lösung ist eine Ausführungsform, bei der die Rohrwand am unteren Ende des Förderrohrs über den Umfang verteilt angeordnete Ausbrüche aufweist, durch die hindurch ein radiales Anströmen der Förderschnecke mit dem zu fördernden viskosen Material erfolgen kann.

Die Ablauffläche wird vorzugsweise von einer um das Förderrohr angeordneten Kegel- oder Kegelstumpffläche gebildet, deren Durchmesser vorzugsweise geringfügig kleiner ist als der Durchmesser des im Allgemeinen zylindrischen Druckbehälters. Bei dem Druckbehälter kann es sich beispielsweise im einfachen Fall um ein Fassbehältnis handeln, in dem die Flüssigkeit geliefert wird. Auf dieses Fassbehältnis kann nach Entfernen eines oberen Deckels ein die Vorrichtung vervollständigender Aufsatz druckdicht montiert werden, der das beim Aufsetzen auf das Fassbehältnis in die Flüssigkeit eintauchende Rührwerk und alle übrigen Bestandteile der erfindungsgemäßen Vorrichtung trägt.

Es ist möglich, dass der Neigungswinkel der Ablauffläche vorzugsweise stufenlos zwischen einem Maximal- und einem Minimalwert einstellbar ist. Durch die Veränderung des Neigungswinkels kann die Verweildauer der auf die Ablauffläche gepumpten Flüssigkeit und deren Schichtdicke eingestellt werden. Meist wird man bei Verarbeitung einer Flüssigkeit mit geringerer Viskosität einen geringeren Neigungswinkel als bei höherviskosen Flüssigkeiten bevorzugen, um ein zu schnelles Ablaufen der Flüssigkeit zu verhindern.

Der Druckbehälter kann mindestens einen oberhalb der Ablauffläche angeordneten Flüssigkeitszulauf aufweisen, was insbesondere in Fällen vorteilhaft ist, in denen die Beladung der Flüssigkeit mit Gas nicht im Transportbehälter der Flüssigkeit selbst geschieht, sondern in einem stationären Druckbehälter. Die erfindungsgemäße Vorrichtung weist bevorzugt mindestens einen Druckgasanschluss auf, wobei der oder ein Druckgasanschluss bei einer ersten Ausführungsform der Erfindung oberhalb eines Flüssigkeitsspiegels in den Druckbehälter mündet. Alternativ oder ergänzend ist es auch möglich, dass der oder ein Druckgasanschluss unterhalb eines Flüssigkeitsspiegels in den Druckbehälter mündet, wobei er dann bevorzugt einen unten im Behälter angeordneten Gasbeladering mit mehreren Gasauslässen aufweist, aus denen das Gas, mit dem die Flüssigkeit beladen werden soll, unmittelbar in diese eingeblasen wird. Die bei dieser Vorgehensweise nicht zu vermeidende Bildung von Gasblasen in der Flüssigkeit wird durch das anschließende Befördern des Gas-Flüssigkeits-Gemisches auf die Ablauffläche neutralisiert, an der dann die Gasblasen ausgasen und nur in der Flüssigkeit gelöstes Gas verbleibt.

Unterhalb des Flüssigkeitsspiegels am Druckbehälter ist zweckmäßig eine Flüssigkeitsabzugsleitung angeschlossen. Mit der Flüssigkeitsabzugsleitung kann dann eine Rezirkulationsleitung verbunden sein, die mit ihrem anderen Ende mit einem Flüssigkeitszulauf zum Behälter verbunden ist. Die mit Gas gesättigte Flüssigkeit kann über die Abzugsleitung aus dem Druckbehälter zur weiteren Verarbeitung abgezogen werden und/oder wahlweise über die Rezirkulationsleitung zurück in den Behälter fließen. Besonders vorteilhaft ist es, wenn an einem Messpunkt unterhalb des Flüssigkeitsspiegels oder an der Flüssigkeitsabzugsleitung eine Gasbeladungsmesseinrichtung angeschlossen ist, mit der das Maß der Sättigung des Gases in der Flüssigkeit bestimmt werden kann. Mithilfe einer solchen Messeinrichtung lässt sich auch eine einfache Regelung der Vorrichtung auf einen bestimmten Luftladewert realisieren, indem nämlich das über die Abzugsleitung abgezogene Material solange zurück in den Behälter rezirkuliert wird, bis der von der Gasbeladungsmesseinrichtung ermittelte Wert einem vorher festgelegten Sollwert, beispielsweise dem Sättigungswert bei einem bestimmten Verarbeitungsdruck, entspricht. Mögliche Regelparamter können dabei beispielsweise der Vordruck im Druckbehälter, die Menge der zusätzlich eingeblasenen Luft und/oder die Taktung bzw. Drehzahl des Rührwerks und damit auch das Volumen der von der Förderschnecke geförderten Flüssigkeitsmenge sein.

In weiterer, vorteilhafter Ausgestaltung der Erfindung ist in der Ablauffläche mindestens eine Überströmöffnung angeordnet, durch die Luft und/oder Flüssigkeit von unten nach oben durchströmen kann. Die Überströmöffnung kann mittels eines Ventilelements, vorzugweise einer elastischen Ventilplatte oder dergleichen gegen ein Durchströmen von oben nach unten gesperrt sein. Mithilfe einer derartigen Überströmöffnung lässt sich eine ansonsten große Materialverdrängung beim Eintauchen des Mechanismus in den Behälter und ein damit verbundenes Ansteigen des Flüssigkeitsspiegels verhindern. Durch die mindestens eine Überströmöffnung wird gewährleistet, dass sich unter der Ablauffläche keine Gasblase bilden kann, die ansonsten eine korrekte Füllstandsmessung schwierig machen würde, wie sie beispielsweise für eine geregelte Nachfüllung des Druckbehälters erforderlich ist.

Von einem unteren Rand der Ablauffläche kann eine vorzugsweise senkrechte, insbesondere zylindrische Führungsfläche anschließen, die vorzugsweise bis mindestens auf das Niveau des Flüssigkeitsspiegels reicht und an der die Flüssigkeit geführt ablaufen kann, ohne unter Tropfenbildung von der Ablauffläche abzufallen.

Die Vorrichtung und das Verfahren können so beschaffen sein, dass das Druckniveau im Behälterinneren, die Fördermenge durch das Förderrohr pro Zeiteinheit und/oder die Neigung der Ablauffläche einstellbar ist/sind, um die Begasungsbedingungen an die durch das verarbeitete Material vorgegebenen Bedingungen optimal anpassen zu können.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert wird. Es zeigt:
- Figur 1: eine Ausführungsform der erfindungsgemäßen Vorrichtung im Vertikalschnitt; und
- Figur 2: eine Abwandlung der erfindungsgemäßen Vorrichtung in vereinfachter, schematischer Darstellung.

In der Zeichnung ist in ihrer Gesamtheit mit dem Bezugszeichen 10 eine Vorrichtung bezeichnet, die dazu dient, eine höherviskose Flüssigkeit 11, beispielsweise ein zur Herstellung einer aufschäumenden Dichtung eingesetztes Silikonmaterial, unter Überdruck mit Luft zu beladen. Die Luftbeladung hat bei derartigen Dichtungsmaterialien einen erheblichen Einfluss auf die spätere Qualität der aufgeschäumten Dichtung, insbesondere deren Oberflächen und deren Porenstruktur. Im Allgemeinen wird angestrebt, die Flüssigkeit, also den Dichtungsrohstoff, bis zur Sättigungsgrenze mit Luft zu beladen, ohne dass sich dabei jedoch freie Luftblasen in der Flüssigkeit befinden. Mit der erfindungsgemäßen Vorrichtung 10 wird eine schnelle und gleichmäßige Lösung der Luft in der Flüssigkeit und damit bei der späteren Weiterverarbeitung des Materials eine ausgezeichnete Schaumqualität erreicht.

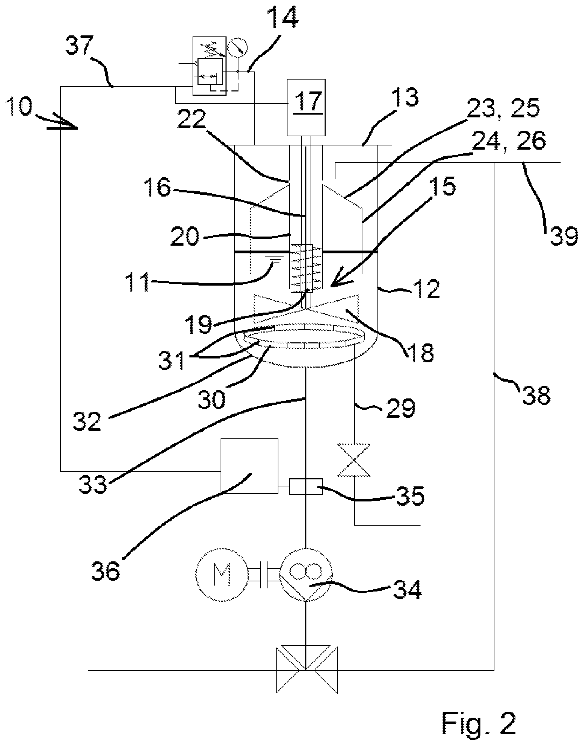

Die Vorrichtung 10 hat einen die Flüssigkeit 11 aufnehmenden Druckbehälter 12 mit einem an dessen Deckel 13 angeordneten Druckluftanschluss 14. Im Behälterinneren ist ein Rührwerk 15 vorgesehen, dessen den Druckbehälter 12 vertikal durchsetzende Antriebswelle 16 zentral am Behälterdeckel 13 drehbar gelagert ist. Das oben aus dem Behälterdeckel 13 ragende Wellenende ist - gegebenenfalls unter Zwischenschaltung eines Getriebes - mit einem Antriebsmotor gekoppelt, der in der Figur 2 schematisch dargestellt und mit 17 bezeichnet ist.

Die Antriebswelle 16 des Rührwerks 15 trägt an ihrem unteren Ende einen vollständig in die Flüssigkeit 11 eintauchenden Mischer 18. Oberhalb des Mischers 18 ist auf der Antriebswelle 16 ein Förderorgan 19 in Form einer Förderschnecke drehfest mit der Welle 16 gekoppelt. Die Antriebswelle 16 mit der daran angeordneten Förderschnecke 19 sind in einem Förderrohr 20 aufgenommen, das den Druckbehälter vertikal durchsetzt und unten ein Stück weit oberhalb des unteren Endes der Förderschnecke endet. Am oberen Ende des Förderrohrs 20, knapp unterhalb der Lagerung für die Antriebswelle 16, ist es mit mehreren, über den Umfang verteilten Auslässen 21 versehen, die einen Auslauf 22 für Flüssigkeit 11 bilden, die beim Drehen der Antriebswelle von der Förderschnecke von unten nach oben durch das Förderrohr 20 transportiert wird.

Unterhalb des Auslaufs 22 ist außen am Förderrohr 20 ein umlaufendes, konisch geneigtes Ablaufblech 23 angeordnet, an dessen äußerem, unterem Rand sich ein parallel zur Achse der Antriebswelle 16 nach unten erstreckender Führungszylinder 24 anschließt. Das Ablaufblech 23 bildet an seiner Oberseite eine Ablauffläche 25 für die Flüssigkeit 11, die aus den Auslässen 21 ausläuft und hierdurch auf das Ablaufblech 23 gelangt, wo es sich auf der oberen Ablauffläche 25 zu einer dünnen Schicht verteilt, deren Dicke zum Einen von der Viskosität des Materials, und zum Anderen der Neigung der oberen Kegelstumpffläche des Ablaufblechs 23 abhängt. Die Flüssigkeit fließt über den unteren Rand der Ablauffläche 25 und anschließend weiter entlang der äußeren zylindrischen Führungsfläche 26 des Führungszylinders 24 zurück in den unten im Druckbehälter 12 stehenden und dort von dem Mischer 18 durchmischten Flüssigkeitsvorrat.

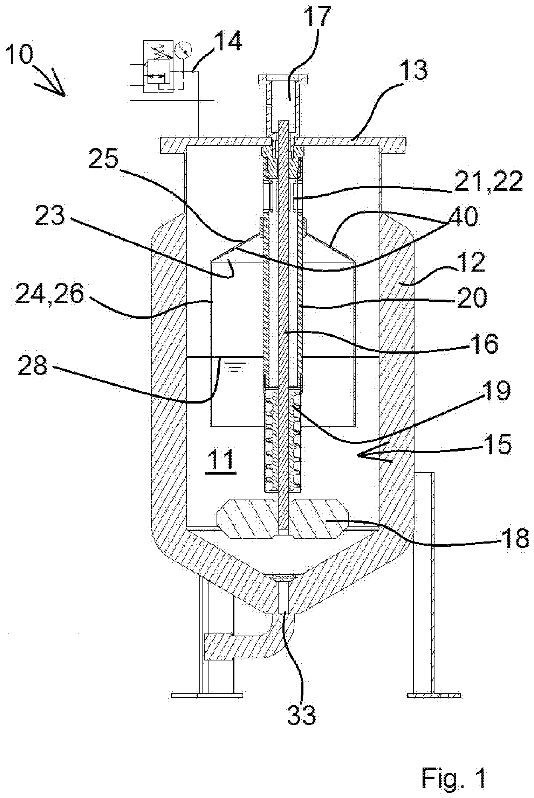

Über den am Deckel 13 des Druckbehälters 12 vorgesehenen Druckluftanschluss 14 kann Druckluft in den Druckbehälter 12 eingelassen und das gewünschte Druckniveau im Behälter 12 eingestellt werden. Bei der in Figur 1 dargestellten Ausführungsform ist der Druckluftanschluss 14 im Behälterdeckel 13 oberhalb des Flüssigkeitsspiegels 28 der einzige Anschluss, über den das in der Flüssigkeit 11 zu lösende Gas in den Behälter 12 gelangt. Im Gegensatz hierzu befindet sich bei der Ausführungsform gemäß Figur 2 ein zusätzlicher Druckgasanschluss 29 unterhalb des Flüssigkeitsspiegels 28 in Form eines unten im Behälter unterhalb des Mischers 18 angeordneten Gasbeladerings 30 mit mehreren Gasauslässen 31, durch die die Druckluft als Luftblasen unmittelbar in die Flüssigkeit 11 gelangen kann. Der obere Luftanschluss 14 dient bei dieser Ausführungsform primär als Regel- bzw. Steueranschluss, um das Druckniveau im Druckbehälter 12 auf dem gewünschten Niveau zu halten.

Am Behälterboden 32 des Druckbehälters 12 ist an diesem eine Flüssigkeits-Abzugsleitung 33 angeschlossen, über die das mit Gas beladene Material aus dem Behälter mittels einer Förderpumpe 34 abgezogen werden kann. Eine vor der Förderpumpe 34 an einem Messpunkt 35 angeschlossene Gasbeladungsmesseinrichtung 36 ermittelt den Sättigungsgrad von Luft in der Flüssigkeit 11, wobei diese Messung zur Regelung der an der Vorrichtung veränderbaren Parameter wie Druck im Behälter 12, Drehzahl des Mischers 18 und dergleichen eingesetzt werden kann, was durch die Datenleitung 37 angedeutet sein soll. An der Abzugsleitung 33 ist hinter der Förderpumpe 34 eine Rezirkulationsleitung 38 über ein Drei-Wege-Ventil angeschlossen, das ebenfalls von der Gasbeladungsmesseinrichtung ein Stellsignal erhalten kann, beispielsweise, wenn der festgestellte Sättigungsgrad den Anforderungen (noch) nicht genügt und das Material daher zur weiteren Beladung mit Luft zurück in den Druckbehälter 12 zirkuliert werden soll. Die Rezirkulationsleitung 38 mündet in einen Flüssigkeitszulauf 39, über den unbehandelte, also noch nicht mit Gas beladene Flüssigkeit, in den Druckbehälter 12 eingebracht werden kann.

Mithilfe der dargestellten und beschriebenen Vorrichtung 10 lässt sich Gas, insbesondere Luft, in nur kurzer Bearbeitungszeit besonders fein in der zu bearbeitenden Flüssigkeit 11, beispielsweise einem viskosen Silikonmaterial, verteilen und in Lösung bringen. Der Mischer 18 des Rührwerks 15 sorgt für eine Homogenisierung des Materials, das mittels des Schneckenförderers 19, 20 im Inneren des Förderrohrs nach oben oberhalb des Flüssigkeitsspiegels 28 gepumpt wird und dort auf die geneigte Ablauffläche 25 gelangt, auf der es in dünner Schicht wieder nach unten abläuft. Hier besteht zwischen Flüssigkeit und dem oberhalb des Flüssigkeitsspiegels stehenden Druckgases eine große Austauschfläche, über die die Druckluft in der Flüssigkeit 11 in Lösung gehen kann, über die andererseits aber auch Luftblasen, die Folge einer lokalen Überkonzentration sein können, besonders schnell aus der Flüssigkeit wieder ausgasen können. Durch die Dünnschichtbe- und Entgasung im Druckbehälter 12 erhält man eine besonders schnelle Homogenisierung und Lösung des Gases in der Flüssigkeit, die dann zur weiteren Verarbeitung über die Abzugsleitung abgezogen werden kann.

Um zu verhindern, dass sich unterhalb des Ablaufbleches 23 im Inneren des Führungszylinders 24 eine Gasblase bildet, wenn der Flüssigkeitsspiegel 28 über den unteren Rand des Führungszylinders 24 ansteigt, sind in dem oberen, kegeligen Ablaufblech 23 Überströmöffnungen 40 vorgesehen, die für einen Druckausgleich und damit einen gleichmäßig hohen Flüssigkeitsstand innerhalb und außerhalb des Führungszylinders sorgen. Damit von oben durch die Überströmöffnungen 40 keine über die Ablauffläche 25 fließende Flüssigkeit von oben durchströmen kann, können die Überströmöffnungen 40 an der Oberseite des Ablaufbleches mit elastischen oder gelenkig angeschlagenen Ventilplatten oder anderen geeigneten Ventilelementen gegen ein Durchströmen von oben nach unten gesperrt sein.

Die Erfindung ist nicht auf das dargestellte und beschriebene Ausführungsbeispiel beschränkt, sondern es sind verschiedene Änderungen und Ergänzungen möglich, ohne den Rahmen der Erfindung zu verlassen. Beispielsweise ist es denkbar, die Neigung der Ablauffläche 25 variabel zu gestalten, um hierdurch die Fließgeschwindigkeit und Schichtdicke des über die Ablauffläche 25 fließenden, flüssigen Materials zu verändern. Die Vorrichtung kann zur chargenweisen Beladung von Flüssigkeit mit Gas eingesetzt werden, es ist aber auch ein kontinuierlicher Betrieb denkbar, in dem unbeladene Flüssigkeit und Druckgas im selben Maße dem Druckbehälter neu zugegeben werden, in welchem das mit Gas bereits beladene Material am unteren Behälterende abgezogen wird. Die Vorrichtung eignet sich insbesondere zur Verarbeitung von Silikon-Rohstoffen für die Herstellung von geschäumten Silikondichtungen, sie ist aber auch für andere Werkstoffe, wie beispielsweise Polyurethanharze und dergleichen geeignet.

## Patentansprüche

1. Vorrichtung zum Beladen einer insbesondere höherviskosen Flüssigkeit mit einem Gas, insbesondere mit Luft, mit einem die Flüssigkeit (11) und das Gas aufnehmenden Behälter, und mit einem zumindest teilweise im Behälter angeordneten Rührwerk (15) mit einer den Behälter (12) zumindest teilweise vertikal durchsetzenden Antriebswelle (16), wobei
die Antriebswelle (16) in einem Förderrohr (20) angeordnet ist und ein die Flüssigkeit (11) durch das Förderrohr (20) zu mindestens einem Auslauf (22) transportierendes Förderorgan (19) antreibt, **dadurch gekennzeichnet, dass** der Behälter als Druckbehälter (12) ausgestaltet ist und dass unterhalb des Auslaufs (22) aus dem Förderrohr (20) eine oberhalb des Flüssigkeitsspiegels (28) eines im Druckbehälter (12) stehenden Flüssigkeitsvorrats angeordnete Ablauffläche (25) für die aus dem Auslauf (22) strömende Flüssigkeit (11) vorgesehen ist.

2. Vorrichtung nach Anspruch 1, **dadurch gekennzeichnet, dass** das Förderorgan (19) von einer im Förderrohr (20) angeordneten, drehfest mit der Antriebswelle (16) gekoppelten Förderschnecke gebildet wird.

3. Vorrichtung nach Anspruch 2, **dadurch gekennzeichnet, dass** die Förderschnecke (19) am unteren Ende des Förderrohrs (20) ein Stück weit aus diesem herausragt.

4. Vorrichtung nach einem der Ansprüche 1 bis 3, **dadurch gekennzeichnet, dass** die Ablauffläche (25) von einer um das Förderrohr (20) angeordneten Kegel- oder Kegelstumpffläche gebildet wird.

5. Vorrichtung nach einem der Ansprüche 1 bis 4, **dadurch gekennzeichnet, dass** der Neigungswinkel der Ablauffläche (25) vorzugsweise stufenlos zwischen einem. Maximal- und einem Minimalwert einstellbar ist.

6. Vorrichtung nach einem der Ansprüche 1 bis 5, **dadurch gekennzeichnet, dass** der Druckbehälter (12) mindestens einen oberhalb der Ablauffläche (25) angeordneten Flüssigkeitszulauf (39) aufweist.

7. Vorrichtung nach einem der Ansprüche 1 bis 6, **gekennzeichnet durch** mindestens einen Druckgasanschluss (27; 29).

8. Vorrichtung nach Anspruch 7, **dadurch gekennzeichnet, dass** der oder ein Druckgasanschluss (27) oberhalb eines Flüssigkeitsspiegels (28) in den Druckbehälter (12) mündet.

9. Vorrichtung nach Anspruch 7 oder 8, **dadurch gekennzeichnet, dass** der oder ein Druckgasanschluss (29) unterhalb eines Flüssigkeitsspiegels (28) in den Druckbehälter (12) mündet.

10. Vorrichtung nach Anspruch 9, **dadurch gekennzeichnet, dass** der Druckgasanschluss (29) einen unten im Behälter (12) angeordneten Gasbeladering (30) mit mehreren Gasauslässen (31) aufweist.

11. Vorrichtung nach einem der Ansprüche 1 bis 10, **gekennzeichnet durch** eine unterhalb des Flüssigkeitsspiegels (28) am Druckbehälter (12) angeschlossene Flüssigkeitsabzugsleitung (33) und eine einerseits mit der Flüssigkeitsabzugsleitung (33) und andererseits mit mindestens einem Flüssigkeitszulauf (39) verbindbare Rezirkulationsleitung (38).

12. Vorrichtung nach einem der Ansprüche 1 bis 11, **gekennzeichnet durch** eine an einem Messpunkt (35) unterhalb des Flüssigkeitsspiegels (28) oder an der Flüssigkeitsabzugsleitung (33) angeschlossene Gasbeladungsmesseinrichtung (36).

13. Vorrichtung nach einem der Ansprüche 1 bis 12, **dadurch gekennzeichnet, dass** in der Ablauffläche (25) mindestens eine Überströmöffnung (40) angeordnet ist.

14. Vorrichtung nach Anspruch 13, **dadurch gekennzeichnet, dass** die Überströmöffnung (40) mittels eines Ventilelements, vorzugsweise einer elastischen Ventilplatte oder dergleichen, gegen ein Durchströmen von oben nach unten gesperrt ist.

15. Vorrichtung nach einem der Ansprüche 1 bis 14, **dadurch gekennzeichnet, dass** sich an einem unteren Rand der Ablauffläche (25) eine vorzugsweise senkrechte, insbesondere zylindrische Führungsfläche (26) anschließt, die vorzugsweise bis mindestens auf das Niveau des Flüssigkeitsspiegels (28) reicht.

16. Verfahren zum Beladen einer insbesondere höherviskosen Flüssigkeit mit einem Gas, insbesondere mit Luft, bei dem in einem Druckbehälter (12) die darin aufgenommene Flüssigkeit mittels eines Rührwerks (15) gerührt wird und im Behälterinneren durch ein Förderrohr (20) auf ein Niveau oberhalb des Flüssigkeitsspiegels (28) gefördert und durch einen Auslauf (22) auf eine Ablauffläche (25) gefördert wird, auf der die Flüssigkeit in dünner Schicht verteilt abläuft und dabei mit dem oberhalb des Flüssigkeitsspiegels (28) unter Druck stehenden Gas beladen wird.

17. Verfahren nach Anspruch 16, **dadurch gekennzeichnet, dass** das Druckniveau im Behälterinneren, die Fördermenge durch das Förderrohr (20) pro Zeiteinheit und/oder die Neigung der Ablauffläche einstellbar ist/sind.

## Claims

1. A device for loading an in particular higher-viscosity liquid with a gas, in particular with air, the device comprising a vessel holding the liquid (11) and the gas, and comprising an agitator (15) which is arranged at least in part in the vessel and which comprises a drive shaft (16) that passes vertically through the vessel (12) at least in part,
the drive shaft (16) being arranged in a conveying tube (20) and driving a conveying element (19) which transports the liquid (11) through the conveying tube (20) to at least one outlet (22), **characterized in that** the vessel is designed as a pressure vessel (12) and **in that** a run-off surface (25) for the liquid (11) flowing out of the outlet (22) is provided below the outlet (22) from the conveying tube (20), which run-off surface is arranged above the liquid level (28) of a liquid supply located in the pressure vessel (12).

2. The device according to claim 1, **characterized in that** the conveying element (19) is formed by a conveying screw arranged in the conveying tube (20) and coupled to the drive shaft (16) for conjoint rotation.

3. The device according to claim 2, **characterized in that** the conveying screw (19) projects to some extent from the conveying tube (20) at the lower end thereof.

4. The device according to one of claims 1 to 3, **characterized in that** the run-off surface (25) is formed by a conical or frustoconical surface arranged around the conveying tube (20).

5. The device according to one of claims 1 to 4, **characterized in that** the angle of inclination of the run-off surface (25) can be adjusted preferably continuously between a maximum value and a minimum value.

6. The device according to one of claims 1 to 5, **characterized in that** the pressure vessel (12) has at least one liquid inlet (39) arranged above the run-off surface (25).

7. The device according to one of claims 1 to 6, **characterized by** at least one compressed gas connection (27; 29).

8. The device according to claim 7, **characterized in that** the or a compressed gas connection (27) leads into the pressure vessel (12) above a liquid level (28).

9. The device according to claim 7 or 8, **characterized in that** the or a compressed gas connection (29) leads into the pressure vessel (12) below a liquid level (28).

10. The device according to claim 9, **characterized in that** the compressed gas connection (29) has a gas loading ring (30) which is arranged at the bottom of the vessel (12) and which comprises a plurality of gas outlets (31).

11. The device according to one of claims 1 to 10, **characterized by** a liquid withdrawal line (33) connected to the pressure vessel (12) below the liquid level (28) and a recirculation line (38) which can be connected at one end to the liquid withdrawal line (33) and at the other end to at least one liquid inlet (39).

12. The device according to one of claims 1 to 11, **characterized by** a gas content measuring device (36) connected to a measuring point (35) below the liquid level (28) or to the liquid withdrawal line (33).

13. The device according to one of claims 1 to 12, **characterized in that** at least one overflow opening (40) is arranged in the run-off surface (25).

14. The device according to claim 13, **characterized in that** the overflow opening (40) is blocked by means of a valve element, preferably a resilient valve plate or the like, against through-flow from the top downward.

15. The device according to one of claims 1 to 14, **characterized in that** a preferably vertical, in particular cylindrical, guide surface (26) is connected to a lower edge of the run-off surface (25) and preferably extends to at least the level of the liquid level (28).

16. A method for loading an in particular higher-viscosity liquid with a gas, in particular with air, wherein in a pressure vessel (12), the liquid held therein is agitated by means of an agitator (15) and conveyed in the vessel interior through a conveying tube (20) to a level above the liquid level (28) and conveyed through an outlet (22) onto a run-off surface (25) on which the liquid runs off so as to be distributed in a thin layer and in the process is loaded with the gas that is under pressure above the liquid level (28).

17. The method according to claim 16, **characterized in that** the pressure level in the vessel interior, the amount conveyed through the conveying tube (20) per unit time and/or the inclination of the run-off surface is/are adjustable.

## Revendications

1. Dispositif permettant de charger un liquide, en particulier hautement visqueux, d'un gaz, en particulier d'air, comportant un récipient recevant le liquide (11) et le gaz, et comportant un mélangeur (15) disposé au moins partiellement dans le récipient et comportant un arbre d'entraînement (16) traversant le récipient (12) au moins partiellement verticalement, dans lequel
l'arbre d'entraînement (16) est disposé dans un tuyau de transport (20) et entraîne un organe de transport (19) transportant le liquide (11) vers au moins une sortie (22) par l'intermédiaire du tuyau de transport (20), **caractérisé en ce que** le récipient est conçu sous forme de récipient sous pression (12) et **en ce que**, en dessous de la sortie (22) à partir du tuyau de transport (20), une surface d'écoulement (25) est prévue pour le liquide (11) s'écoulant de la sortie (22), laquelle surface d'écoulement est disposée au-dessus du plan de liquide (28) d'un réservoir de liquide se trouvant dans le récipient sous pression (12).

2. Dispositif selon la revendication 1, **caractérisé en ce que** l'organe de transport (19) est formé par une vis transporteuse disposée dans le tuyau de transport (20) et accouplée de manière solidaire en rotation à l'arbre d'entraînement (16).

3. Dispositif selon la revendication 2, **caractérisé en ce que** la vis transporteuse (19) au niveau de l'extrémité inférieure du tuyau de transport (20) fait saillie quelque peu de ladite extrémité.

4. Dispositif selon l'une des revendications 1 à 3, **caractérisé en ce que** la surface d'écoulement (25) est formée par une surface conique ou tronconique disposée autour du tuyau de transport (20).

5. Dispositif selon l'une des revendications 1 à 4, **caractérisé en ce que** l'angle d'inclinaison de la surface d'écoulement (25) peut être réglé de préférence sans discontinuité entre une valeur maximale et une valeur minimale.

6. Dispositif selon l'une des revendications 1 à 5, **caractérisé en ce que** le récipient sous pression (12) présente au moins une entrée de liquide (39) disposée au-dessus de la surface d'écoulement (25).

7. Dispositif selon l'une des revendications 1 à 6, **caractérisé par** au moins un raccord de gaz sous pression (27 ; 29).

8. Dispositif selon la revendication 7, **caractérisé en ce que** le ou un raccord de gaz sous pression (27) débouche au-dessus d'un plan de liquide (28) dans le récipient sous pression (12).

9. Dispositif selon la revendication 7 ou 8, **caractérisé en ce que** le ou un raccord de gaz sous pression (29) débouche en dessous d'un plan de liquide (28) dans le récipient sous pression (12).

10. Dispositif selon la revendication 9, **caractérisé en ce que** le raccord de gaz sous pression (29) présente un anneau de chargement de gaz (30) disposé en bas du récipient (12) et comportant plusieurs sorties de gaz (31).

11. Dispositif selon l'une des revendications 1 à 10, **caractérisé par** un conduit d'évacuation de liquide (33) raccordé au récipient sous pression (12) en dessous du plan de liquide (28) et un conduit de recirculation (38) pouvant être relié d'une part au conduit d'évacuation de liquide (33) et d'autre part à au moins une entrée de liquide (39).

12. Dispositif selon l'une des revendications 1 à 11, **caractérisé par** un appareil de mesure de chargement de gaz (36) raccordé à un point de mesure (35) en dessous du plan de liquide (28) ou au conduit d'évacuation de liquide (33).

13. Dispositif selon l'une des revendications 1 à 12, **caractérisé en ce qu'**au moins une ouverture de trop-plein (40) est disposée dans la surface d'écoulement (25).

14. Dispositif selon la revendication 13, **caractérisé en ce que** l'ouverture de trop-plein (40) est bloquée de haut en bas contre un écoulement à l'aide d'un élément de soupape, de préférence d'une plaque de soupape élastique ou d'un élément similaire.

15. Dispositif selon l'une des revendications 1 à 14, **caractérisé en ce qu'**une surface de guidage (26) de préférence verticale, en particulier cylindrique, se raccorde à un bord inférieur de la surface d'écoulement (25), laquelle surface de guidage s'étend de préférence au moins jusqu'au niveau du plan de liquide (28).

16. Procédé permettant de charger un liquide, en particulier hautement visqueux, d'un gaz, en particulier d'air, dans lequel le liquide reçu dans un récipient sous pression (12) est mélangé dans celui-ci à l'aide d'un mélangeur (15), transporté à l'intérieur du récipient par un tuyau de transport (20) à un niveau au-dessus du plan de liquide (28) et transporté par une sortie (22) au niveau d'une surface d'écoulement (25) sur laquelle le liquide s'écoule de façon répartie en couche mince et est ainsi chargé du gaz sous pression se trouvant au-dessus du plan de liquide (28).

17. Dispositif selon la revendication 16, **caractérisé en ce que** le niveau de pression à l'intérieur du récipient, le débit de transport à travers le tuyau de transport (20) par unité de temps et/ou l'inclinaison de la surface d'écoulement peuvent être réglés.
